# EUROPEAN PATENT SPECIFICATION

(11) **EP 2 465 727 B1**
(45) Date of publication and mention of the grant of the patent: **25.03.2015**
(21) Application number: 10195116.8
(22) Date of filing: 15.12.2010
(51) Int. Cl.: B60R 1/00, B60R 11/04, E05B 65/00, E05B 85/10

(54) **Camera arrangement and door handle for motor vehicle**
Kameraanordnung und Türgriff für Kraftfahrzeuge
Agencement de caméra et poignée de porte pour véhicule à moteur

(43) Date of publication of application: 20.06.2012
(73) Proprietor: SMR Patents S.à.r.l., 1653 Luxembourg (LU)
(72) Inventor: Hwang, Hyok-Joo, 420-860, Bucheon City (KR)
(74) Representative: Weber-Bruls, Dorothée

(56) References cited:
- WO-A2-02/062623
- DE-A1-102004 042 591
- DE-A1-102005 060 400

## Description

The invention relates to a camera arrangement for a motor vehicle in line with the pre-amble or claim 1. More particular it relates to camera arrangements for e.g. at least side view and/or e.g. partly aft view purposes, like e.g. for blind spot surveillance, track visualisation beside the vehicle to provide e.g. a real-time view of the surrounding area etc. The invention also relates to a door handle allowing surveying at least a part of surrounding located laterally next to the motor vehicle with respect to driving direction.

To provide a real-time view of the surrounding area of a motor vehicle it is known to arrange one or two cameras on the front of a motor vehicle, e.g. at the fender or within the headlamps, two cameras at the mudguards, one on each side of the motor vehicle, plus at least one camera aft the motor vehicle.

Major disadvantages of cameras arranged at the mudguards are their high exposure to dirt, stone chipping and the need for an extra electrical connection to the control unit of the motor vehicle.

From DE 10 2005 051 600 A1 it is known to arrange a camera for rearward surveillance purposes at the rear end of a motor vehicle laterally displaced to a rear door handle.

DE 10 2004 042 591 A1 as well as DE 10 2005 060 400 A1 describe hatch doors with camera arrangements, whereas WO 02/062623 A2 gives a large variety of examples of camera locations within a motor vehicle.

For blind spot detection it is known to arrange sensors in the external rear view mirrors, so called wing mirrors, of a motor vehicle. An advantage of this sensor arrangement is an easy to establish electrical connection to the control unit of the motor vehicle via the electrical connection of the wing mirror.

Disadvantageously wing mirror mounted sensor arrangements suffer a high dirt exposure and impact. This is because wing mirror mounted sensor arrangements have a restricted reliability and trustworthiness.

From DE 44 10 620 A1 a monitoring device for the driver and or passenger side of motor vehicles is known. The monitoring device comprises a sensor in the vehicle's wing mirror for monitoring the blind spot region. The sensor, an ultrasonic or infrared sensor, is connected to a control unit that causes a visual signal to light up in the exterior mirror in the event that an object is detected in the blind spot in order to warn the driver. Object identification or predictive interpretation of motion is impossible.

From DE 10 2005 056 976 A1 it is known to use a camera arrangement to survey at least a part of surrounding located laterally next to a motor vehicle with respect to driving direction for lane-departure-warning purposes and detection of obstacles within the surveyed surrounding.

It is an object of the present invention to provide al reliable camera arrangement for motor vehicles for surveillance of at least a part of surrounding located laterally next to the motor vehicle with respect to driving direction, e.g. for at least side view and/or aft view purposes. It is also an object of the invention to provide a door handle allowing surveying at least a part of surrounding located laterally next to the motor vehicle with respect to driving direction.

The object of the invention is met by a camera arrangement for motor vehicles according to claim 1.

Thus according to the invention a camera arrangement for a motor vehicle for surveillance of at least a part of a surrounding located laterally next to the motor vehicle with respect to driving direction comprises at least one camera capturing real time images of an area under surveillance. The at least one camera is arranged or integrated in at least one door handle of at least one door of the motor vehicle. Thereby the terms door knob, door pull and handgrip are all subsumed under the term door handle. The camera arrangement can be used e.g. for at least side view and aft view purposes, e.g. for blind spot surveillance. Thus according to the invention a door handle for a motor vehicle comprises at least one camera for surveillance of at least a part of surrounding located laterally next to the motor vehicle with respect to driving direction. The camera can be accommodated by the door handle. Thereby the camera can be integrated or arranged in the door handle, e.g. in a housing that at least forms a part of the door handle. The camera allows capturing real time images of an area under surveillance.

The camera arrangement and the door handle according to the invention do not suffer the disadvantages of the state of the art. In particularly the arrangement of at least one camera in a door handle provides a well-sheltered location for at least one camera. By the well sheltered arrangement within the door handle the camera can be used to reliably capture preferably real time images of a desired area e.g. at least besides and aft the motor vehicle. The increased reliability compared to the state of the art among other things depends on the low dirt impact and stone-chipping probability a door handle is exposed to. In other words the increased reliability is based on the fact that particularly the lateral door handles of a motor vehicle are only marginal exposed to dirt, stone chipping and the like.

Additionally the arrangement of the at least one camera in the door handle allows an easy electrical connection since door handles of motor vehicles are connected to the intelligence of the motor vehicle anyway. Thus the electrical connection of the camera can be established via the electrical connection of the door handle that is already electrically connected to the so called intelligence of the motor vehicle represented by at least one control unit of said motor vehicle. Supplementary using the images captured in real time by the camera arrangement allows object identification or predictive interpretation e.g. of motion. By arranging at least one camera in a door handle on the driver and/or passenger side of a motor vehicle for surveillance of at least a part of surrounding located laterally next to the motor vehicle with respect to driving direction, the images captured and provided by the at least one camera allow to provide e.g. a reliable real time visualisation of the area under surveillance. Additionally reliable blind spot surveillance can be provided by the images captured by the camera.

The images captured by the camera arrangement can be used additionally or alternatively for other purposes, like e.g. for driver assistance systems like e.g. lane keeping, lane departure warning and the like. It is also thinkable to use the images captured by the camera for comfort systems. An example is to provide a picture of the ground beside the motor vehicle before stepping of e.g. to avoid to step into mud or a puddle.

At least one lighting unit is foreseen for at least temporary illuminating at least a part of the surrounding surveyed by the camera. The lighting unit is also arranged in the door handle that accommodates the camera. It is also thinkable that the lighting unit is part of a camera module, preferably a pre-assembled camera module.

A light exit face of the lighting unit encircles the camera. Doing so a uniform illumination of the area illuminated with respect to the camera is achieved.

Thereby the lighting unit can emit infrared light and/or light that is visible for the human eye. It is thinkable that the wavelength of the light emitted depends on a driving situation. For example it is possible that e.g. infrared light is emitted to illuminate the area under surveillance particularly during night whilst driving the motor vehicle. E.g. when locking or unlocking the motor vehicle or in another appropriate situation, alternatively or additionally visible light can be used e.g. for visual signalisation or for illumination e.g. when stepping of the motor vehicle.

The lighting unit preferably comprises at least one light emitting diode (LED).

Additionally or alternatively the lighting unit can comprise at least one light guide.

A transparent cover can be foreseen to protect the camera from environmental influence. The transparency of the cover preferably depends on the wavelength-range the camera is sensitive to. The cover provides an additional protection of the camera system, which is already well protected due to its arrangement in the door handle.

The transparent cover can be formed by at least a part of an outer surface of the door handle.

The transparent cover can comprise a lens for the camera or can be comprised by a lens of the camera.

According to a preferred embodiment of the invention the camera is foreseen at least for blind-spot surveillance.

Additionally or alternatively the images captured by the camera arrangement in real time can be used for real time visualisation of the surrounding area of a motor vehicle e.g. on a display inside of the motor vehicle interior, e.g. a car entertainment and/or navigation system display arranged on the dashboard. Additionally or alternatively the images captured can be used for lane-departure-warning and/or lane keeping and/or obstacle detection purposes and the like.

Preferably a pre-assembled camera module arranged within the door handle comprises the camera.

According to another preferred embodiment of the invention the camera is at least partly accommodated by a housing forming at least a part of the outer surface of the door handle. Thereby at least a part of the door handle comprises at least one housing forming at least a part of the outer surface of the door handle, which housing at least partly accommodates at least the at least one camera.

The housing preferably is part of a first, stationary part of the door handle, wherein a second, movable part of the door handle can be foreseen to actuate a lock mechanism of the door of the motor vehicle. Thereby the door handle can additionally comprise a third, stationary part. The first stationary part or the optionally foreseen third, stationary part can also accommodate a remote control receiver and/or a lock cylinder to lock and to unlock the lock mechanism of the door.

The camera can be electrically connected to a control unit of the motor vehicle via an electrical connection of the door handle to the intelligence of the motor vehicle.

The foregoing, together with other objects, features, and advantages of this invention can be better appreciated with reference to the following specification, claims and drawings.

In the following certain preferred embodiments of the invention are described by way of example and with reference to the accompanying drawings wherein like reference numerals refer to like elements and wherein:

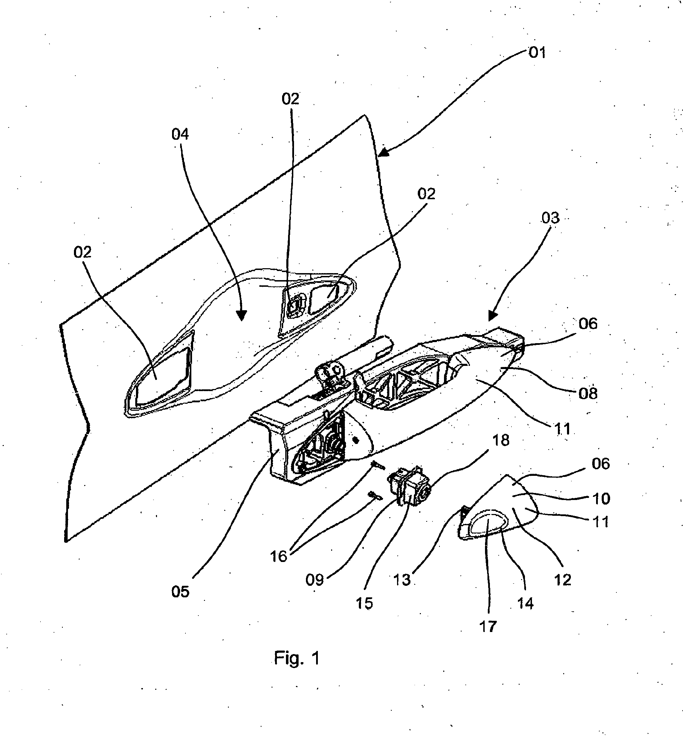

Fig. 1 shows a detail of a door of a motor vehicle with a partly exploded perspective view of a camera arrangement and a door handle according to the invention.

Fig. 1 shows a detail of a blank sheet 07 of a door 01 of a motor vehicle. The door 01 has openings 02 for a door handle 03. The door 01 also has a recess 04 to facilitate to clasp the door handle 03.

The door handle 03 comprises an inner part 05 and an outer part 06. The inner part 05 is arranged behind the blank sheet 07 of the door 01. In a mounted condition of the door handle 03 the inner part 05 is arranged within the door 01 and is not visible from outside the motor vehicle. The inner part 05 of the door handle 03 and the outer part 06 of the door handle 03 are connected with each other through the openings 02.

The outer part 06 of the door handle 03 comprises a movable part 08. The movable part 08 is foreseen to actuate the lock mechanism of the door 01 of the motor vehicle. To actuate the lock mechanism, the movable part 08 can be pulled laterally off the door 01.

To transmit a movement of the movable part 08 to the lock mechanism of the door 01, the inner part 05 accommodates an actuating mechanism, which transforms the lateral movement of the movable part 08 into an appropriate movement required to actuate the lock mechanism in the door 01.

The door handle 03 accommodates at least one camera 09 for surveillance of at least a part of a surrounding located laterally next to the motor vehicle with respect to the driving direction indicated by the arrow D. The camera 09 preferably is part of a pre assembled camera module 15. The camera 09 captures real time images of an area under surveillance. The images captured by the camera 09 can be foreseen at least for blind-spot surveillance. The images captured by the camera 09 can be used additionally or alternatively for other purposes, like e.g. for driver assistance systems like e.g. lane keeping, lane departure warning and the like. It is also thinkable to use the images captured by the camera for comfort systems like e.g. to provide a picture of the ground beside the motor vehicle before stepping of e.g. to avoid to step into mud or a puddle.

The camera 09 preferably is arranged in the outer part 06 of the door handle 03. The camera 09 can be at least partly accommodated by a housing 10 forming at least a part of the outer surface 11 of the door handle 03. The housing 10 preferably is part of a stationary part 12 of the outer part 06 of the door handle 01. The housing 10 can have an opening 17 for an objective 18 of the camera 09. The stationary part 12 can also accommodate a remote control receiver and/or a lock cylinder to lock and to unlock the lock mechanism of the door 01.

At least one lighting unit 13 can be foreseen which at least temporary illuminates at least a part of the surrounding surveyed by the camera 09. The lighting unit 13 preferably is also arranged in the door handle 03 that accommodates the camera 09. It is also thinkable that the lighting unit 13 is part of a camera module 15, preferably a pre-assembled camera module 15.

Preferably a light exit face 14 of the lighting unit 13 encircles the camera 09. The light exit face 14 can be a part of at least one light guide. The light guide can be a part of the lighting unit 13.

A transparent cover can be foreseen to protect the camera 09 from environmental influence. The transparency of the cover preferably depends on the wavelength-range the camera 09 is sensitive to. Also the lighting unit 13 can be covered by the transparent cover. The transparent cover can comprise a lens for the camera 09, e.g. a fisheye lens, or can be comprised by a lens of the camera 09. Additionally or alternatively the light exit face 14 of the lighting unit 13 can be a part of the transparent cover and/or an optionally foreseen light guide optionally forming at least a part of the light exit face 14 can also be part of the transparent cover. The transparent cover can be part of the housing 10. To do so, the housing 10 itself can be at least partly made of an appropriate transparent material.

Bolts and/or screws 16 and/or rivets can be used to join the camera 09 with the inner part 05 and/or with the outer part 06, particularly e.g. with the housing 10 of the door handle 03.

While the present invention has been described in detail, in conjunction with specific preferred embodiments, it is evident that many alternatives, modifications and variations will be apparent to those skilled in the art in light of the foregoing description.

The invention is commercially applicable particularly in the field of production of automotive parts.

## Claims

1. A camera arrangement for a motor vehicle for surveillance of at least a part of a surrounding of the motor vehicle, the camera arrangement comprising one camera (09, 15) and one door handle (3), the camera (09, 15) capturing real time images of an area under surveillance, with
the camera (09, 15) being arranged in said door handle (03), **characterized in that** the door handle (03) is arranged in at least one door (01) of the motor vehicle on the driver or passenger side for surveillance of at least a part of a surrounding located laterally next to the motor vehicle with respect to the driving direction (D) of the moor vehicle and
comprising one lighting unit (13) for at least temporary illuminating at least a part of the surrounding surveyed by the camera (09, 15),with
the lighting unit (13)also being arranged in the door handle (03) that accommodates the camera such that a light exit face (14) of the lighting unit (13) encircles the camera (09, 15).

2. Camera arrangement according to claim 1,
**characterized by**
a transparent cover protecting the camera (09, 15) from environmental influence wherein the transparency of the cover depends on the wavelength-range the camera (09, 15) is sensitive to.

3. Camera arrangement according to
claim 1 or 2,
the camera (09) is comprised by a pre-assembled camera module (15) arranged within the door handle (03).

4. Camera arrangement according to one of the previous claims,
**characterized in that**
at least a part (06) of the door handle (03) comprises at least one housing (10) forming at least a part of the outer surface (11) of the door handle (03), which housing (10) at least partly accommodates at least the camera (09, 15).

5. Camera arrangement according to claim 4
**characterized in that**
the housing (10) is part of a first, stationary part (12) of the door handle (03), and a second, movable part (08) of the door handle (03) is foreseen to actuate a lock mechanism of the door (01) of the motor vehicle.

6. Camera arrangement according to one of the previous claims,
**characterized in that**
the camera (09, 15) is electrically connected to a control unit of the motor vehicle via an electrical connection of the door handle (03).

## Patentansprüche

1. Kameraanordnung für ein Kraftfahrzeug zur Überwachung wenigstens eines Teils einer Umgebung des Kraftfahrzeugs, wobei die Kameraanordnung eine Kamera (09, 15) und einen Türgriff (3) umfasst, wobei die Kamera (09, 15) Echtzeitbilder eines Überwachungsbereichs aufnimmt, wobei
die Kamera (09, 15) in dem Türgriff (03) angeordnet ist, **dadurch gekennzeichnet, dass** der Türgriff (03) in wenigstens einer Tür (01) des Kraftfahrzeugs auf der Fahrer- oder Beifahrerseite angeordnet ist, um wenigstens einen Teil einer bezogen auf die Fahrtrichtung (D) des Kraftfahrzeugs seitlich neben dem Kraftfahrzeug befindlichen Umgebung zu überwachen, und
eine Beleuchtungseinheit (13) zur wenigstens zeitweiligen Beleuchtung wenigstens eines Teils der durch die Kamera (09, 15) überwachten Umgebung umfasst, wobei die Beleuchtungseinheit (13) ebenfalls in dem die Kamera aufnehmenden Türgriff (03) angeordnet ist, derart dass eine Lichtaustrittsfläche (14) der Beleuchtungseinheit (13) die Kamera (09, 15) kreisförmig umschließt.

2. Kameraanordnung nach Anspruch 1, gekennzeichnet durch
eine die Kamera (09, 15) vor Umwelteinflüssen schützende transparente Abdeckung, wobei die Transparenz der Abdeckung vom Wellenlängenbereich abhängt, für den die Kamera (09, 15) empfindlich ist.

3. Kameraanordnung nach Anspruch 1 oder 2,
wobei die Kamera (09) ein innerhalb des Türgriffs (03) angeordnetes vormontiertes Kameramodul (15) umfasst.

4. Kameraanordnung nach einem der vorangehenden Ansprüche, **dadurch gekennzeichnet, dass**
wenigstens ein Teil (06) des Türgriffs (03) wenigstens ein Gehäuse (10) umfasst, das wenigstens einen Teil der Außenfläche (11) des Türgriffs (03) ausbildet, wobei das Gehäuse (10) wenigstens die Kamera (09, 15) wenigstens teilweise aufnimmt.

5. Kameraanordnung nach Anspruch 4, **dadurch gekennzeichnet, dass** das Gehäuse (10) Teil eines ersten, feststehenden Teils (12) des Türgriffs (03) ist und ein zweites, bewegliches Teil (08) des Türgriffs (03) vorgesehen ist, um einen Verriegelungsmechanismus der Tür (01) des Kraftfahrzeugs zu betätigen.

6. Kameraanordnung nach einem der vorangehenden Ansprüche, **dadurch gekennzeichnet, dass**
die Kamera (09, 15) über eine elektrische Verbindung des Türgriffs (03) elektrisch mit einer Steuereinheit des Kraftfahrzeugs verbunden ist.

## Revendications

1. Agencement de caméra pour véhicule à moteur destiné à surveiller au moins une partie des alentours du véhicule à moteur, l'agencement de caméra comprenant une caméra (09, 15) et une poignée de porte (3), la caméra (09, 15) capturant des images en temps réel d'une zone sous surveillance, la caméra (09, 15) étant agencée dans la poignée de porte (03), **caractérisé en ce que** la poignée de porte (03) est agencée dans au moins une porte (01) du véhicule à moteur sur le côté conducteur ou passager pour la surveillance d'au moins une partie des alentours située latéralement à proximité du véhicule à moteur par rapport à la direction de conduite (D) du véhicule à moteur et
comprenant une unité d'éclairage (13) pour éclairer au moins temporairement au moins une partie des alentours surveillée par la caméra (09, 15), l'unité d'éclairage (13) étant également agencée dans la poignée de porte (03) qui reçoit la caméra de telle sorte qu'une face de sortie de lumière (14) de l'unité d'éclairage (13) entoure la caméra (09, 15).

2. Agencement de caméra selon la revendication 1, **caractérisé par** un couvercle transparent protégeant la caméra (09, 15) vis-à-vis d'une influence environnementale dans lequel la transparence du couvercle est fonction de la plage de longueurs d'onde à laquelle la caméra (09, 15) est sensible.

3. Agencement de caméra selon les revendications 1 ou 2, la caméra (09) étant constituée par un module de caméra près assemblé (15) agencé dans la poignée de porte (03).

4. Agencement de caméra selon l'une quelconque des revendications précédentes, caractérisé en ce
qu'au moins une partie (06) de la poignée de porte (03) comprend au moins un boîtier (10) formant au moins une partie de la surface extérieure (11) de la poignée de porte (03), lequel boîtier (10) reçoit au moins partiellement au moins la caméra (09, 15).

5. Agencement de caméra selon la revendication 4, **caractérisé en ce que** le boîtier (10) est une partie d'une première partie stationnaire (12) de la poignée de porte (03), et une seconde partie mobile (08) de la poignée de porte (03) est prévue pour actionner un mécanisme de verrou de la porte (01) du véhicule à moteur.

6. Agencement de caméra selon l'une quelconque des revendications précédentes, **caractérisé en ce que**
la caméra (09, 15) est reliée électriquement à une unité de commande du véhicule à moteur par l'intermédiaire d'une connexion électrique de la poignée de porte (03).
